# EUROPEAN PATENT APPLICATION

(11) **EP 4 082 683 A1**
(43) Date of publication of application: **02.11.2022**
(21) Application number: 20908320.3
(22) Date of filing: 24.12.2020
(51) Int. Cl.: B09B 3/00, B09B 5/00, D21C 5/02, B02C 18/00, B02C 18/14, C02F 11/145

(54) **CRUSHING DEVICE AND WASTE TREATMENT DEVICE**

(30) Priority: 24.12.2019 JP 2019232434; 24.12.2019 JP 2019232435; 24.12.2019 JP 2019232436; 24.12.2019 JP 2019232438; 24.12.2019 JP 2019232454
(71) Applicant: LIXIL Corporation, Koto-ku Tokyo 136-8535 (JP)
(72) Inventor: FUKUMOTO, Katsuhisa, Tokyo 136-8535 (JP); WATANABE, Hiroaki, Tokyo 136-8535 (JP); MAKI, Michitarou, Tokyo 136-8535 (JP); HATANAKA, Ikunori, Tokyo 136-8535 (JP)
(74) Representative: karo IP
(86) International application number: PCT/JP2020/048411
(87) International publication number: WO 2021/132455

(57) **Abstract**

It facilitates recovery of polymers. A crushing device (25) includes a housing (13) into which a paper diaper (D) containing polymers (P) in a water-absorbed state is thrown, and a crushing member (28) that is accommodated in the housing (13) and crushes the paper diaper (D). A moving speed of the crushing member (28) is 0.1 m/s or less.

## Description

### TECHNICAL FIELD

The present disclosure relates to a crushing device and a waste treatment device.

### BACKGROUND ART

JP 2000-84533 A discloses a disposal facility for disposing a paper diaper. In this disposal facility, after the paper diaper is crushed by a crushing unit, moisture is separated from polymers of the paper diaper, and a pulp component and the polymers contained in the paper diaper are recovered.

JP 2000-84533 A discloses a disposal facility for disposing a paper diaper. In this disposal facility, after the paper diaper is crushed by a crushing unit, moisture is separated from polymers, and a pulp component contained in the paper diaper is recovered. In a step of separating moisture from the polymers, crushed pieces of the paper diaper, water, and a decomposer are mixed and stirred in a polymer decomposition tank.

JP 2000-84533 A discloses a disposal facility for disposing a paper diaper. In this disposal facility, after the paper diaper is crushed, moisture is separated from polymers of the paper diaper, and a pulp component and the polymers contained in the paper diaper are recovered. In a step of separating moisture from the polymers, crushed pieces of the paper diaper, water, and a decomposer are mixed and stirred in a polymer decomposition tank.

JP 2000-84533 A discloses a disposal facility for disposing a used paper diaper. In this disposal facility, after the paper diaper is crushed, crushed pieces of the paper diaper, water, and a decomposer are mixed and stirred in a polymer decomposition tank to separate moisture from polymers of the paper diaper. After the moisture is separated from the polymers, solid materials in the polymer decomposition tank are discharged together with a waste liquid, and the solid materials are recovered. The paper diaper contains the polymers in a sheet material, and the polymers and the sheet material are the solid materials discharged from the polymer decomposition tank.

JP 2000-84533 A discloses a disposal facility for disposing a used paper diaper. In this disposal facility, after the paper diaper is crushed, crushed pieces of the paper diaper, water, and a decomposer are mixed and stirred in a polymer decomposition tank to separate moisture from polymers of the paper diaper. After the moisture is separated from the polymers, a pulp component in the polymer decomposition tank is dehydrated by a pulp dehydrator and recovered.

### SUMMARY OF INVENTION

When the polymers from which the moisture has been separated are to be recovered by a filter, if the polymers are finely crushed by the crushing unit, the polymers pass through the mesh of the filter, so that the polymers cannot be recovered.

A crushing device of a first aspect has been made in view of the above conventional circumstances, and has an object to be solved to facilitate recovery of polymers.

In a water separation treatment, the volume of the polymers decreases as the moisture is separated from the polymers. Therefore, when the polymers from which the moisture has been separated are to be recovered by the filter, the polymers may pass through the mesh of the filter, so that the polymers may not be recovered.

A waste treatment device of a second aspect has been made in view of the above conventional circumstances, and has an object to be solved to facilitate recovery of polymers.

When the paper diaper is crushed into a strip shape, if the crushed pieces of the paper diaper are stirred by a propeller-like stirring member, the strip-like crushed pieces are entangled with the propeller, and the stirring may become insufficient. If the stirring is insufficient, a decomposition treatment of the polymers may also become insufficient.

A waste treatment device of a third aspect has been made in view of the above conventional circumstances, and has an object to be solved to stir the crushed pieces of the object to be treated without entangling them.

As a material of the sheet material, pulp and resin material such as polyethylene are used. Among the solid materials discharged from the polymer decomposition tank, the polymers and the pulp have a larger specific gravity than the waste liquid. On the other hand, the resin material has a smaller specific gravity than the waste liquid, and therefore floats on the liquid level of the waste liquid. Thus, after the polymers and the pulp are discharged together with the waste liquid, the resin material remains on the bottom surface of the polymer decomposition tank without being discharged.

A waste treatment device of a fourth aspect has been made in view of the above conventional circumstances, and has an object to be solved to discharge the object to be treated in the treatment tank without remaining.

Since the pulp dehydrator is set at the same height as the polymer decomposition tank, a pump is provided to send the pulp component in the polymer decomposition tank to the pulp dehydrator. When the pulp component is sent to the pulp dehydrator without using the pump, the pulp dehydrator may be installed below the polymer decomposition tank, and an on-off valve may be provided in a discharge path from the polymer decomposition tank to the pulp dehydrator. The on-off valve is closed while the treatment for separating moisture from the polymers is performed in the polymer decomposition tank. After the moisture is separated from the polymers, when the on-off valve is opened, the pulp component is discharged from the polymer decomposition tank by the weight of the pulp component and the water pressure in the polymer decomposition tank. However, when the on-off valve is a ball valve, there is a concern that the crushed pieces of the paper diaper may be clogged in the on-off valve since the cross-sectional area of the flow path in the on-off valve is relatively small.

A waste treatment device of a fifth aspect has been made in view of the above conventional circumstances, and has an object to be solved to prevent clogging of the on-off valve.

The crushing device includes: a housing into which an object to be crushed containing polymers in a water-absorbed state is thrown; and a crushing member that is accommodated in the housing and crushes the object to be crushed, in which a moving speed of the crushing member is 0.1 m/s or less.

The waste treatment device of the second aspect includes: a water separation treatment device that performs a water separation treatment for separating moisture from polymers in a water-absorbed state by a treatment liquid for reducing a water retention capacity of the polymers; a dehydration device that separates the treatment liquid and the polymers transferred from the water separation treatment device, by a filter; and a control unit that performs control for transferring the polymers in the water separation treatment device to the dehydration device in a state where the polymers immersed in the treatment liquid have a larger representative parameter indicating a degree of water absorption than the polymers before water absorption.

The waste treatment device of the third aspect includes: a treatment tank capable of storing crushed pieces of an object to be treated having polymers in a water-absorbed state and a treatment liquid for reducing a water retention capacity of the polymers; and a stirring member including a disk-shaped main body, and a rib protruding from a surface of the main body and extending in a radial direction from a rotation center of the main body, the stirring member being rotatably provided in the treatment tank.

The waste treatment device of the fourth aspect includes a treatment tank in which crushed pieces of an object to be treated having polymers in a water-absorbed state and a treatment liquid for reducing a water retention capacity of the polymers are stored, and a discharge port for discharging the crushed pieces and the treatment liquid in the treatment tank is opened on a side surface of the treatment tank.

The waste treatment device of the fifth aspect includes: a treatment tank in which crushed pieces of an object to be treated containing polymers in a water-absorbed state and a treatment liquid for reducing a water retention capacity of the polymers are stored; a discharge path for discharging the crushed pieces and the treatment liquid in the treatment tank to the outside of the treatment tank; an on-off valve provided in the middle of the discharge path; and a control unit that changes an opening degree of the on-off valve with time in a discharge process in the discharge path.

### BRIEF DESCRIPTION OF DRAWINGS

Fig. 1 is a configuration diagram of a waste treatment device according to a first embodiment;
Fig. 2 is a plan view of a deodorizing device;
Fig. 3 is a cross-sectional view taken along line X-X of Fig. 1;
Fig. 4 is a horizontal cross-sectional view of a water separation treatment device;
Fig. 5 is a cross-sectional view taken along line Y-Y of Fig. 4;
Fig. 6 is a flowchart of control leading to start of a crushing treatment;
Fig. 7 is a flowchart of a water separation treatment step and a dehydration step;
Fig. 8 is a graph showing a change in particle size of polymers in the water separation treatment step; and
Fig. 9 is a graph showing a temporal change of an opening degree of an on-off valve.

### DESCRIPTION OF EMBODIMENTS

### <First embodiment>

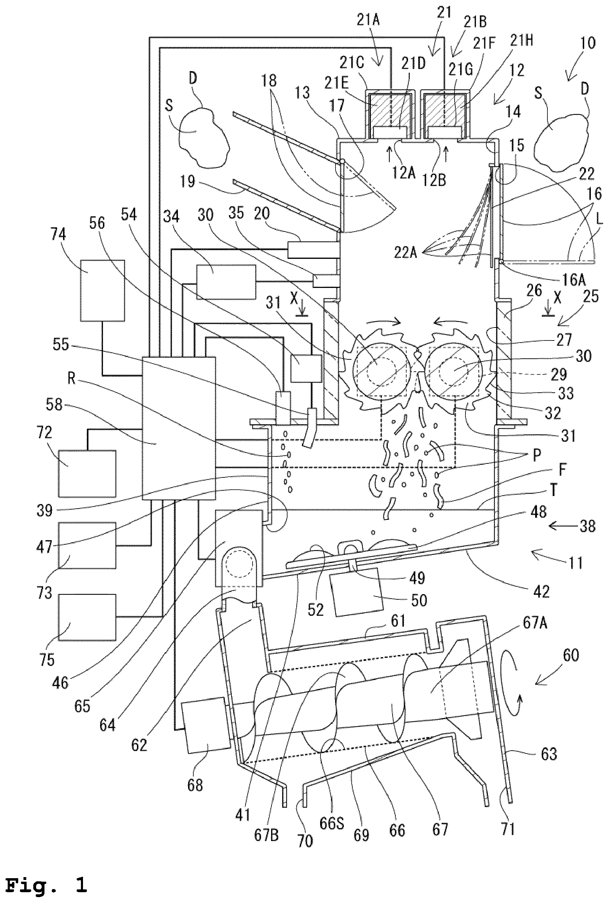

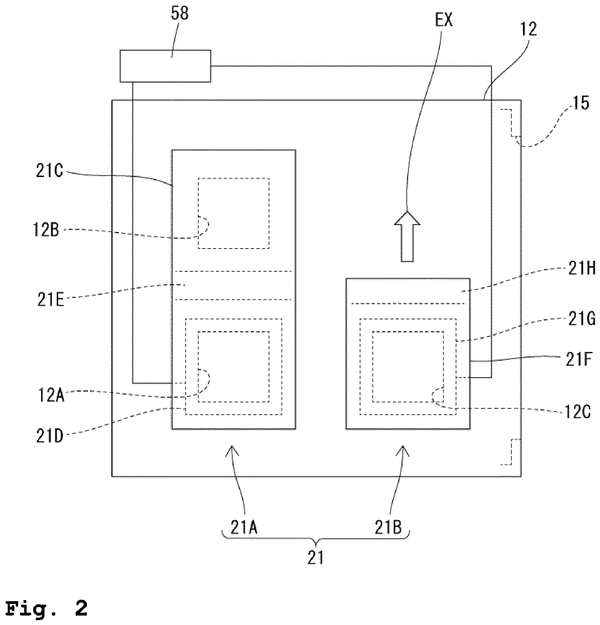

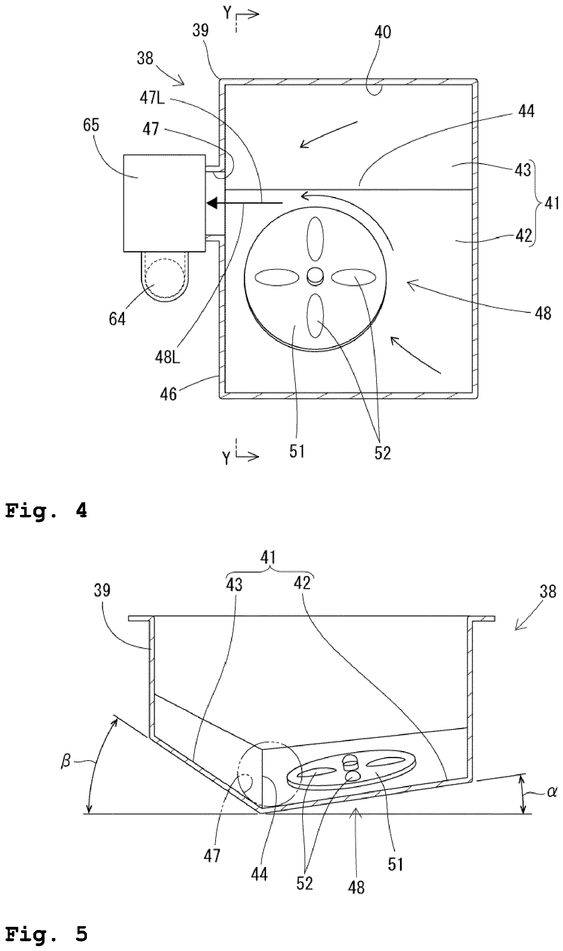

Hereinafter, a first embodiment in which waste treatment devices 10 of second, third, fourth, and fifth aspects each including a crushing device 25 of a first aspect are embodied will be described with reference to Figs. 1 to 9. In the following description, regarding the up-down direction, the directions shown in Figs. 1 and 5 are defined as upward and downward as they are. Regarding the left-right direction, the directions shown in Figs. 1 to 4 are defined as left and right as they are. Regarding the front-rear direction, the lower side in Figs. 2 and 4 and the right side in Fig. 5 are defined as the front.

The waste treatment devices 10 of the second, third, fourth, and fifth aspects each including the crushing device 25 of the first aspect are devices that perform a treatment for discarding a used paper diaper D as an object to be treated. The waste treatment device 10 is installed in a care facility or the like where a plurality of used paper diapers D is irregularly generated with a time difference.

The paper diaper D to be treated is one in which a super absorbent polymers P (SAP, hereinafter simply referred to as polymers P) and pulp are contained in a sheet material S such as a nonwoven fabric. The sheet material S includes a surface layer material made of a nonwoven fabric made of polypropylene or the like, and a waterproof material made of a resin material such as polyethylene. The pulp and the polymers P are sandwiched between the surface layer material and the waterproof material. The pulp and the polymers P have water absorption property for absorbing moisture of wastes such as human urine, and water retention property for maintaining a state of having absorbed the moisture. The sheet material S contains a resin material having a specific gravity smaller than that of water, such as polyethylene. The particle size of the polymers P before absorbing moisture is 150 to 600 µm. The polymers P that have absorbed moisture swell to be gelled, and the particle size of the polymers P in a water-absorbed state is 600 µm to 4 mm.

The treatment of the used paper diaper D is performed through a crushing step of crushing the paper diaper D, a water separation treatment step of separating moisture from the polymers P in the water-absorbed state, and a dehydration step. In the dehydration step, the waste liquids such as a treatment liquid T and moisture separated from the polymers P used in the water separation treatment step are separated from the solid material such as the sheet material S and the polymers P.

In the water separation treatment step, a water separation agent R that lowers the water retention property of the polymers P that have absorbed moisture is used. Specifically, crushed pieces F of the paper diaper D are immersed in the treatment liquid T in which the water separation agent R is dissolved in water. The crushed pieces F contain the polymers P in the water-absorbed state. In the present embodiment, calcium chloride containing a divalent metal ion is used as an example of the water separation agent R. By reacting the water separation agent R with the polymers P, moisture is separated from the polymers P that have absorbed moisture. The polymers P from which moisture has been separated lose water absorption property, and become an irreversible state uncapable of absorbing moisture again. Even if the used paper diaper D contains the polymers P that have not absorbed moisture, the water absorption property of the polymers P is lost.

As shown in Fig. 1, the waste treatment devices 10 of the second, third, fourth, and fifth aspects each including the crushing device 25 of the first aspect each include a multifunctional treatment device 11 and a dehydration device 60. The multifunctional treatment device 11 includes a throwing unit 12, a crushing device 25, a water separation treatment device 38, and a control unit 58. The multifunctional treatment device 11 includes a vertically long box-shaped housing 13 shared by the throwing unit 12, the crushing device 25, and the water separation treatment device 38. The crushing device 25 is arranged below the throwing unit 12, the water separation treatment device 38 is arranged below the crushing device 25, and the dehydration device 60 is arranged below the water separation treatment device 38.

The throwing unit 12 has a box shape with an open lower surface. The inside of the throwing unit 12 is a throwing space 14 into which the used paper diaper D is thrown. In the first embodiment, the throwing unit 12 is provided with a first throwing port 15 and a second throwing port 17. The throwing unit 12 may be provided with only one of the first throwing port 15 and the second throwing port 17. The first throwing port 15 is formed in a right wall portion constituting the housing 13. The first throwing port 15 is provided with a first lid 16 which can be opened and closed from the outside of the throwing unit 12. The first lid 16 has a central shaft 16A extending in the horizontal direction (that is, in the front-back direction) along its lower end edge. The central shaft 16A is supported by the housing 13. The first lid 16 can turn outward around the central shaft 16A to change its own posture to an upright state V and a laid state L.

A closing portion 22 is provided in the throwing unit 12 so as to cover the first throwing port 15 from the inside. The closing portion 22 is made of, for example, flexible rubber or synthetic resin formed in a flat plate shape. In the closing portion 22, multiple slits are formed from slightly below the upper end of the closing portion 22 to the lower end thereof. A plurality of rectangular portions 22A whose upper end portions are connected to each other is formed by the slits in the closing portion 22. The closing portion 22 is attached to the throwing unit 12 such that the upper end portion thereof is along the upper end edge of the first throwing port 15. For example, when the paper diaper D is thrown into the throwing unit 12 from the first throwing port 15, the rectangular portions 22A of the closing portion 22 are pushed and spread out into the throwing unit 12. When the throwing of the paper diaper D into the throwing unit 12 is completed, the rectangular portions 22A return to the original posture so as to close the first throwing port 15 again.

The used paper diaper D generated on the floor where the second, third, fourth, and fifth waste treatment devices 10 each including the crushing device 25 of the first aspect are installed can be thrown into the throwing space 14 from the first throwing port 15. At this time, the first lid 16 is manually changed from the upright state V to the laid state L, and the first throwing port 15 is opened. A user throws the paper diaper D into the throwing unit 12 through the first throwing port 15 and the closing portion 22. At this time, the posture of the first lid 16 is maintained in the laid state L. Therefore, moisture or the like adhering to the inner surface of the first lid 16 (that is, in the upright state V, the surface located in the throwing unit 12) can be prevented from flowing to the floor. The paper diaper D is thrown into the throwing unit 12 along the inner surface of the first lid 16. Therefore, when the paper diaper D is thrown from the first throwing port 15, the posture of the paper diaper D with respect to the crushing device 25 tends to be stable. After throwing in the paper diaper D, the user manually changes the first lid 16 from the laid state L to the upright state V, and brings the first throwing port 15 into the closed state.

The second throwing port 17 is formed in a left wall portion, among the wall portions constituting the housing 13, which is different from the wall portion where the first throwing port 15 is formed. The second throwing port 17 is provided with a second lid 18 which opens into the throwing space 14. A downstream end of a shooter 19 is connected to the second throwing port 17. An upstream end of the shooter 19 functions as a disposal port (not shown) provided in an upper floor higher than the floor where the waste treatment device 10 is installed. The used paper diaper D generated in the upper floor is thrown into the shooter 19 from the disposal port. The paper diaper D thrown into the shooter 19 passes through the shooter 19, and pushes and moves the second lid 18 so that the paper diaper D is stored into the throwing space 14 from the second throwing port 17. Once the paper diaper D passes through the second throwing port 17, the second lid 18 closes the second throwing port 17 by its own weight.

The throwing unit 12 is provided with a throwing sensor 20 which detects throwing of the paper diaper D into the throwing space 14 through the first throwing port 15 and the second throwing port 17. The throwing sensor 20 transmits a detection signal to the control unit 58 every time one paper diaper D is thrown. An operation unit (not shown) is electrically connected to the control unit 58. A user of the waste treatment device 10 can start or stop the operation of the waste treatment device 10 by operating the operation unit.

A deodorizing device 21 is provided on an upper surface of the throwing unit 12. As shown in Fig. 2, a first opening 12A, a second opening 12B, and a third opening 12C are formed in the upper surface of the throwing unit 12. The third opening 12C is arranged along a right side edge of the upper surface of the throwing unit 12, which is the side edge close to the first throwing port 15 in the left-right direction. The first opening 12A and the second opening 12B are arranged along a left side edge of the upper surface of the throwing unit 12, which is the side edge away from the first throwing port 15 in the left-right direction with the third opening 12C interposed therebetween.

As shown in Fig. 2, the deodorizing device 21 includes a first deodorizing device 21A and a second deodorizing device 21B. The first deodorizing device 21A and the second deodorizing device 21B are arranged side by side in the left-right direction on the upper surface of the throwing unit 12. Specifically, the second deodorizing device 21B is arranged along the right side edge of the upper surface of the throwing unit 12, which is close to the first throwing port 15 in the left-right direction. The first deodorizing device 21A is arranged along the left side edge of the upper surface of the throwing unit 12, which is away from the first throwing port 15 in the left-right direction with the second deodorizing device 21B interposed therebetween. The first deodorizing device 21A includes a case 21C, an intake unit 21D, and a deodorizing unit main body 21E. The case 21C has a box shape with an upper end closed and a lower end opened. The case 21C is attached such that its lower end abuts on the upper surface of the throwing unit 12. The case 21C allows the first opening 12A and the second opening 12B of the throwing unit 12 to communicate with each other.

For example, a known axial fan or the like is used for the intake unit 21D. The intake unit 21D sucks air from its lower surface and blows the air from its upper surface. The intake unit 21D is electrically connected to the control unit 58. The intake unit 21D is attached to the upper surface of the throwing unit 12 so as to cover the first opening 12A with its lower surface. The intake unit 21D is located in the case 21C. The intake unit 21D sucks the air from the throwing unit 12 through the first opening 12A.

As the deodorizing unit main body 21E, for example, a so-called deodorizing filter formed of a nonwoven fabric or the like to which activated carbon is attached is used. The deodorizing unit main body 21E is arranged such that the air blown from the upper surface (that is, the surface for blowing) of the intake unit 21D is blown onto the front side surface of the deodorizing unit main body 21E. Specifically, the deodorizing unit main body 21E is arranged in the case 21C so as to partition a side communicating with the first opening 12A and a side communicating with the second opening 12B. The intake unit 21D sucks the air in the throwing unit 12 from the lower surface and blows the air from the upper surface toward the deodorizing unit main body 21E. The deodorizing unit main body 21E deodorizes the air blown from the upper surface of the intake unit 21D. The deodorized air is returned into the throwing unit 12 through the second opening 12B. The second opening 12B is a circulation port for returning the air deodorized by the first deodorizing device 21A into the throwing unit 12. The first deodorizing device 21A mainly deodorizes the air by circulating the air in the front-rear direction in the left region in the throwing unit 12.

The second deodorizing device 21B includes a case 21F, an intake unit 21G, and a deodorizing unit main body 21H. The case 21F has a box shape with an upper surface closed, and a lower surface and a part of rear surface opened. The case 21F is attached such that its lower surface abuts on the upper surface of the throwing unit 12. The rear surface of the case 21F is open. The case 21F is arranged on the upper surface of the throwing unit 12 such that the lower surface of the case 21F overlaps the third opening 12C of the throwing unit 12 from above.

Similarly to the intake unit 21D, a known axial fan or the like is used for the intake unit 21G. The intake unit 21G sucks air from its lower surface and blows the air from its upper surface. The intake unit 21G is electrically connected to the control unit 58. The intake unit 21G is attached to the upper surface of the throwing unit 12 so as to cover the third opening 12C with the lower surface of the intake unit 21G. The intake unit 21G is located in the case 21F. The intake unit 21G sucks the air from the throwing unit 12 through the third opening 12C.

As in the deodorizing unit main body 21E, for example, a so-called deodorizing filter formed of a nonwoven fabric or the like to which activated carbon is attached is used as the deodorizing unit main body 21H. The deodorizing unit main body 21H is arranged so as to close the opened rear surface of the case 21F. The air blown from the upper surface (that is, the surface for blowing) of the intake unit 21G is blown onto the front surface of the deodorizing unit main body 21H. The deodorizing unit main body 21H discharges the deodorized air from the rear surface to the outside. At this time, air Ex discharged to the outside is discharged toward the rear direction which is different from the right side where the first throwing port 15 is formed. As a result, the deodorized air is not discharged toward the user at the position facing the first throwing port 15, and therefore the waste treatment device 10 can make the user less likely to feel odor. The intake unit 21G sucks the air in the throwing unit 12 from the lower surface and blows the air from the upper surface toward the deodorizing unit main body 21H. That is, the second deodorizing device 21B sucks the odor generated from the paper diaper D thrown into the throwing unit 12, from the right side of the throwing unit 12 to deodorize the odor, and discharges the deodorized air to the outside.

The crushing device 25 is a device for crushing the paper diaper D thrown into the throwing unit 12, which is an object to be crushed. The crushing device 25 includes a peripheral wall portion 26, a pair of left and right crushing members 28, and a first water supply unit 34. The peripheral wall portion 26 constitutes the housing 13 and is continuous with the lower end of the wall portion of the throwing unit 12. A crushing space 27 surrounded by the peripheral wall portion 26 is formed inside the crushing device 25. The crushing space 27 communicates with the throwing space 14. The pair of crushing members 28 are accommodated in the crushing space 27.

The pair of crushing members 28 each have a cylindrical shape whose axis is oriented in the front-rear direction as a whole. Each crushing member 28 includes a rotation shaft 30 rotationally driven by a crushing motor 29. The drive of the crushing motor 29 is controlled by the control unit 58. The pair of crushing members 28 are arranged such that the axes of the rotation shafts 30 are arranged side by side at the same height. A plurality of shear blades 31 is formed on the outer periphery of each crushing member 28. One shear blade 31 has a disk shape concentric with the rotation shaft 30. The maximum outer diameter of the shear blade 31 is larger than the outer diameter of the rotation shaft 30. The shear blades 31 are arranged at regular intervals in the axial direction of the rotation shaft 30. The axial width dimension of one shear blade 31 is equal to or slightly smaller than the interval between the adjacent shear blades 31.

The outer peripheral surface of each shear blade 31 has a saw-tooth shape in which protrusions 32 are arranged at a constant pitch in the circumferential direction. The protruding direction of the protrusion 32 is an oblique direction with respect to the radial direction of the shear blade 31. The protrusion 32 protrudes forward in the rotation direction of the protrusion 32. Recesses 33 are each formed between the protrusions 32 adjacent in the circumferential direction on the outer periphery of the shear blade 31. The recesses 33 are arranged at intervals in the circumferential direction on the outer periphery of the shear blade 31. The shapes of the protrusion 32 and the recess 33 of one shear blade 31 are bilaterally symmetrical with the shapes of the protrusion 32 and the recess 33 of the other shear blade 31.

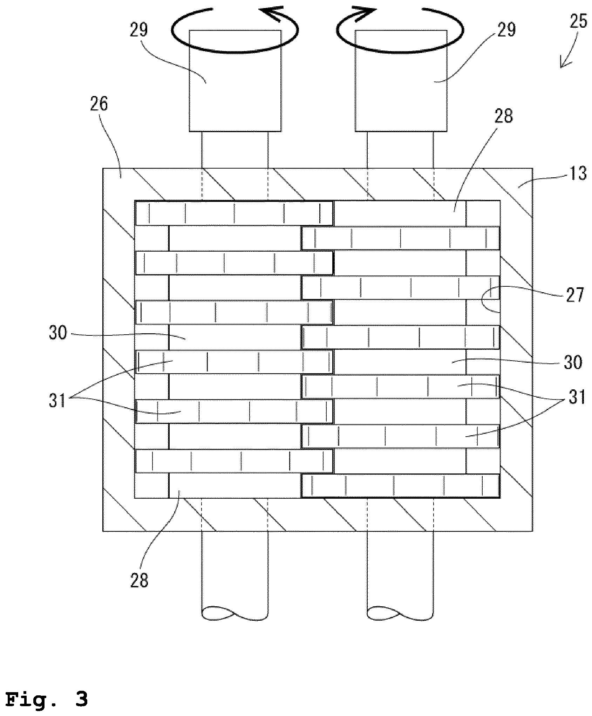

As shown in Fig. 3, the plurality of shear blades 31 formed in one crushing member 28 and the plurality of shear blades 31 formed in the other crushing member 28 are alternately arranged in the axial direction of the rotation shaft 30. In the front view shown in Fig. 1 in which the waste treatment device 10 is viewed from the front, the rotation direction of one crushing member 28 and the rotation direction of the other crushing member 28 are opposite to each other. In a region where one shear blade 31 and the other shear blade 31 overlap each other in the axial direction, one shear blade 31 and the other shear blade 31 are both displaced downward as the crushing members 28 rotate.

Between the shear blades 31 adjacent in the axial direction, there is a minimum necessary clearance to the extent that the crushing members 28 can smoothly rotate without interfering with each other and that the crushed pieces F of the paper diaper D are not bitten between the shear blades 31. The clearance between the shear blades 31 is, for example, 40 µm or more. Between the outer periphery of the shear blade 31 of one crushing member 28 and the outer peripheral surface of the rotation shaft 30 of the other crushing member 28, there is a minimum necessary clearance to the extent that the rotation of both the crushing members 28 is not hindered. A clearance between the shear blade 31 and the rotation shaft 30 is, for example, 100 µm or more.

A portion of the shear blade 31 opposite to a portion alternately arranged in the axial direction is displaced upward as the crushing member 28 rotates. A portion of the shear blade 31 that moves upward is arranged along the inner surface of the peripheral wall portion 26. Between the shear blade 31 and the peripheral wall portion 26, there is a minimum necessary clearance to the extent that the shear blade 31 can smoothly rotate without interfering with the peripheral wall portion 26 and that the crushed pieces F of the paper diaper D do not enter between the shear blade 31 and the peripheral wall portion 26. The clearance between the shear blade 31 and the peripheral wall portion 26 is, for example, 100 µm or more.

The maximum outer diameter of one crushing member 28 and the maximum outer diameter of the other crushing member 28 have the same dimension. The maximum outer diameter of the crushing member 28 is 120 mm, and the rotation speed of the crushing member 28 is 9 rpm. Therefore, the peripheral speed of the outer periphery of the crushing member 28, that is, the peripheral speed of the shear blade 31 is 0.057 m/s. The peripheral speed of the outer periphery of the crushing member 28, that is, the peripheral speed of the shear blade 31 is preferably 0.1 m/s or less. The width dimension of one shear blade 31, that is, the dimension in the axial direction of the rotation shaft 30 is 6 mm or more and 30 mm or less. The width dimension of the shear blade 31 is preferably larger than 4 mm, which is the particle size of the polymers P in a water-absorbed state.

The first water supply unit 34 is arranged at a position above the crushing members 28 in the peripheral wall portion 26. Water is discharged into the crushing space 27 from the first nozzle 35 of the first water supply unit 34. The water discharged from the first nozzle 35 falls down onto the crushing member 28 from above. The water falling down onto the crushing member 28 passes through the gap between the shear blades 31, the gap between the shear blade 31 and the rotation shaft 30, and the gap between the shear blade 31 and the peripheral wall portion 26, and flows down to the lower side of the crushing member 28. The water supply operation of the first water supply unit 34 is controlled by the control unit 58.

The water separation treatment device 38 includes a treatment tank 39, a stirring member 48, a second water supply unit 54, and a water separation agent supply unit 56. The treatment tank 39 has a box shape, and a right side region of an upper surface of the treatment tank 39 is open. The inside of the treatment tank 39 is a treatment space for performing a water separation treatment. The opened right side region of the upper surface portion of the treatment tank 39 is continuous with the upper end of the peripheral wall portion 26 of the crushing device 25. The crushing space 27 and the space in the treatment tank 39 communicate vertically.

A bottom surface 41 of the treatment tank 39 includes a first inclined surface 42 formed of a flat surface and a second inclined surface 43 formed of a flat surface as well. The bottom surface 41 of the treatment tank 39 is bent in a valley shape at a boundary line 44 between the first inclined surface 42 and the second inclined surface 43. The first inclined surface 42 constitutes a front region of the bottom surface 41. The first inclined surface 42 is arranged below the opening region of the upper surface of the treatment tank 39, that is, below the pair of crushing members 28. The second inclined surface 43 constitutes a rear region of the bottom surface 41. The second inclined surface 43 is arranged in a region deviated rearward from the pair of crushing members 28.

As shown in Fig. 5, the lower end edge of the first inclined surface 42 in the left-right direction and the lower end edge of the second inclined surface 43 in the left-right direction are continued at an obtuse angle. The first inclined surface 42 is inclined so as to extend downward toward the rear side and is inclined so as to extend downward toward the left side. The second inclined surface 43 is inclined so as to extend downward toward the front side and is inclined so as to extend downward toward the left side. The boundary line 44 between the first inclined surface 42 and the second inclined surface 43 is inclined in a downward direction toward a discharge port 47 which will be described later. The front-rear dimension of the first inclined surface 42 is larger than the front-rear dimension of the second inclined surface 43. As shown in Fig. 5, in side view, an inclination angle β of the second inclined surface 43 with respect to a horizontal plane H is larger than an inclination angle α of the first inclined surface 42 with respect to the horizontal plane H. The inclination angle α of the first inclined surface 42 is 15°. The inclination angle β of the second inclined surface 43 is 45° or less.

The circular discharge port 47 is formed in a left side wall portion 46 constituting the treatment tank 39. After the water separation treatment is ended in the treatment tank 39, the crushed pieces F, the polymers P, and the treatment liquid T in the treatment tank 39 are discharged from the discharge port 47 to the outside of the treatment tank 39, and sent to the dehydration device 60 through a discharge path 64. The crushed pieces F also include lightweight fragments in the sheet material S such as a resin material having a density lower than that of water. The height dimension of the opening region of the discharge port 47, that is, the diameter dimension of the discharge port 47 is 50 mm or more. This dimension setting is based on the assumption that the maximum width dimension of the crushed pieces F sheared by the shear blades 31 is about 30 mm.

The discharge port 47 is opened rightward toward the inside of the treatment tank 39 and is opened at the lowest position of the bottom surface 41. Specifically, the discharge port 47 is opened at a lower end position in the left edge portion of each of the first inclined surface 42 and the second inclined surface 43, and at a position corresponding to the boundary line 44 in the front-rear direction. Therefore, the bottom surface 41 of the treatment tank 39 is inclined downward toward the discharge port 47.

The lowermost end of the discharge port 47 is located at a height close to the lowermost end of the bottom surface 41 of the treatment tank 39. The maximum depth of the treatment tank 39 is a height dimension from the lowermost end (that is, the left end) of the boundary line 44 in the bottom surface 41 of the treatment tank 39 to the upper end of the treatment tank 39 (that is, the lower end of the crushing device 25). The maximum depth of the treatment tank 39 is a dimension within 3 times the height from the bottom surface 41 of the treatment tank 39 to the uppermost end of the discharge port 47. The maximum depth of the treatment liquid T that can be stored in the treatment tank 39 is a height dimension from the bottom surface 41 to the maximum liquid level. The maximum depth of the treatment tank 39 is the same dimension as the maximum liquid level. According to this dimension setting, the water level of the treatment liquid T stored in the treatment tank 39 can be made relatively low to secure a large area of the liquid surface of the treatment liquid T. In the first embodiment, the left-right dimension and the front-rear dimension of the treatment tank 39 are larger than the maximum depth dimension of the treatment tank 39.

The bottom surface 41 is provided with a stirring member 48. As shown in Fig. 4, in a plan view of the water separation treatment device 38 viewed from above, the stirring member 48 is arranged only in a range corresponding to the first inclined surface 42 in the bottom surface 41. In the front-rear direction, the stirring member 48 is arranged at a position deviated to the rear side with respect to the center of the first inclined surface 42, that is, a side close to the discharge port 47 and the boundary line 44. In the left-right direction, the stirring member 48 is arranged at a position deviated to the left side with respect to the center of the first inclined surface 42, that is, a side close to the discharge port 47. As shown in Fig. 1, the stirring member 48 is driven to rotate by a stirring motor 50 having a drive shaft 49 in the vertical direction.

The stirring member 48 includes a main body 51 which is concentric with the drive shaft 49 and has a disk shape, and a plurality of ribs 52 which rotate integrally with the main body 51. The main body 51 is parallel to the first inclined surface 42. Between the lower surface of the main body 51 and the first inclined surface 42, there is a clearance to the extent that the stirring member 48 is enabled to rotate smoothly and that the crushed pieces F of the paper diaper D are not bitten therebetween. The clearance between the stirring member 48 and the first inclined surface 42 is about 10 mm. The ribs 52 protrude from the surface of the main body 51 and extend in the radial direction from the rotation center of the main body 51. The ribs 52 are radially arranged on the upper surface of the main body 51.

The drive of the stirring motor 50 is controlled by the control unit 58. In the water separation treatment, the stirring member 48 is driven to alternately rotate in the forward direction and in the opposite direction by the control unit 58. The forward direction is the counterclockwise direction in Fig. 4, and the opposite direction is the clockwise direction in Fig. 4. After the water separation treatment, the crushed pieces F containing the polymers P in the treatment tank 39 and the treatment liquid T are discharged from the discharge port 47. In a plan view, a flow line 47L of a discharge flow at the discharge port 47 is a direction perpendicular to the left side wall portion 46 in which the discharge port 47 is formed, and is a direction parallel to the boundary line 44. Among the tangent lines which are tangent to the outer peripheral edge of the stirring member 48, the tangent line perpendicular to the left side wall portion 46 is close to the flow line 47L of the discharge flow in parallel therewith. In other words, the discharge port 47 exists on an extension line of the tangent line that is parallel to the boundary line 44 among the tangent lines tangent to the outer peripheral edge of the stirring member 48. Therefore, in the flow generated by the rotation of the stirring member 48 at the time of discharge, a flow line 48L of the flow toward the discharge port 47 is close to the flow line 47L of the discharge flow at the discharge port 47 in parallel therewith.

During the water separation treatment, the rotation angle of the stirring member 48 in one forward direction is 60°. The rotation angle of the stirring member 48 in one opposite direction is 45° smaller than the rotation angle of the stirring member 48 in the forward direction. In both the forward direction and the opposite direction, one rotation angle is preferably 10° or more and 120° or less. The stirring member 48 has an outer diameter of 120 mm. The time required for one rotation in the forward direction is 0.3 seconds, and the time required for one rotation in the opposite direction is 0.2 seconds. The peripheral speed of the outer periphery of the stirring member 48 is 200 mm/s. The peripheral speed of the outer periphery of the stirring member 48 during the water separation treatment may be adjusted in the range of 100 to 500 mm/s. After the water separation treatment is ended, the peripheral speed of the outer periphery of the stirring member 48 is adjusted to 600 mm/s or more from the start of water supply into the treatment tank 39 until the crushed pieces F and the treatment liquid T in the treatment tank 39 are discharged and the solid materials of the crushed pieces F are recovered from the dehydration device 60.

The second water supply unit 54 has a second nozzle 55 attached to the treatment tank 39. The second nozzle 55 faces the inside of the treatment tank 39. The second nozzle 55 is arranged in a direction in which water is discharged toward the discharge port 47. Discharge and stop of water from the second nozzle 55 are controlled by the control unit 58. The water separation agent supply unit 56 is attached to the treatment tank 39. The water separation agent supply unit 56 supplies a predetermined amount of the water separation agent R into the treatment tank 39. The supply operation and the supply amount of the water separation agent R are controlled by the control unit 58.

The discharge path 64 is provided between the treatment tank 39 and the dehydration device 60. The upstream end of the discharge path 64 is connected to the discharge port 47. A downstream end of the discharge path 64 is connected to the dehydration device 60. The discharge path 64 has a form having a downward gradient from the upstream end toward the downstream end over the entire region. The crushed pieces F, the treatment liquid T, and the like in the treatment tank 39 flow to the downstream side in the discharge path 64 by their own weight and the water pressure of the treatment liquid T in the treatment tank 39.

An on-off valve 65 which opens and closes the discharge path 64 is provided in the middle of the discharge path 64. As the on-off valve 65, for example, an electric ball valve is used. When the on-off valve 65 is opened, the crushed pieces F and the treatment liquid T in the treatment tank 39 flow into a dehydrator 61 through the discharge port 47 and the discharge path 64. When the on-off valve 65 is closed, the crushed pieces F and the treatment liquid T in the treatment tank 39 do not flow out to the dehydrator 61 and remain in the treatment tank 39. The opening/closing operation of the on-off valve 65, which will be described in detail later, is controlled by the control unit 58.

The dehydration device 60 includes the dehydrator 61, an inflow portion 62, an outflow portion 63, and a water collection portion 69. The inflow portion 62 is arranged at the left end portion of the dehydrator 61 and has a form protruding upward in a tubular shape from the dehydrator 61. The downstream end of the discharge path 64 is connected to the upper end portion of the inflow portion 62. The crushed pieces F and the treatment liquid T in the treatment tank 39 are transferred into the dehydrator 61 by passing through the discharge port 47, the discharge path 64, the on-off valve 65, and the inflow portion 62. The inflow portion 62 communicates with the discharge port 47 of the treatment tank 39 via the discharge path 64. The outflow portion 63 is arranged at the right end portion of the dehydrator 61 and has a form protruding downward in a tubular shape from the dehydrator 61. A recovery port 71 opened downward is formed at a lower end portion of the outflow portion 63.

The dehydration device 60 is arranged immediately below the treatment tank 39. The inflow portion 62 is arranged at the left end portion of the dehydration device 60. The discharge port 47 is arranged at the left end portion of the treatment tank 39. Therefore, the length of the discharge path 64 of the first embodiment is the shortest path as compared with the case where either one of the discharge port 47 or the inflow portion 62 is arranged at a position horizontally opposite to that in the first embodiment. Since the discharge path 64 is a path for sending the crushed pieces F and the treatment liquid T to the dehydration device 60 by its own weight and the water pressure of the treatment liquid T in the treatment tank 39, the short path length means that the crushed pieces F are less likely to get stuck in the discharge path 64.

The dehydrator 61 accommodates a dehydration filter 66 and a screw 67 as a transfer member. The dehydration filter 66 has a tubular shape whose axis is oriented in the left-right direction. The mesh size of the dehydration filter 66 is, for example, 300 µm. The mesh size is smaller than the particle size of the polymers P in the water-separated state after moisture is separated from the water-absorbed state. The internal space of the dehydration filter 66 is a transfer space 66S for transferring the crushed pieces F. An upstream end of the transfer space 66S communicates with a lower end portion of the inflow portion 62, and a downstream end of the transfer space 66S communicates with an upper end portion of the outflow portion 63.

The screw 67 includes a shaft portion 67A and a feed plate 67B spirally protruding from the outer periphery of the shaft portion 67A. The screw 67 is coaxially accommodated in the dehydration filter 66 and is driven to rotate by a dehydration motor 68. The operation of the dehydration motor 68 is controlled by the control unit 58. The screw 67 rotates in a direction of transferring the crushed pieces F and the treatment liquid T that have been transferred from the inflow portion 62 into the transfer space 66S, to the outflow portion 63. The crushed pieces F which do not pass through the mesh of the dehydration filter 66 are carried to the downstream end of the transfer space 66S by the feed plate 67B of the screw 67, fall in the outflow portion 63, and are recovered from the recovery port 71.

In the lower surface portion of the dehydrator 61, the water collection portion 69 is formed in a region corresponding to the dehydration filter 66. In the direction of transfer by the screw 67, the water collection portion 69 is opened upward toward the transfer space 66S over the transfer path by the screw 67, that is, over the entire range from the upstream end to the downstream end of the transfer space 66S. A drain port 70 is formed at the lowest position of the water collection portion 69. In the process in which the screw 67 transfers the crushed pieces F and the treatment liquid T in the transfer space 66S, the waste liquid containing the treatment liquid T flows down to the outside of the transfer space 66S through the mesh of the dehydration filter 66. The waste liquid flowing down to the outside of the transfer space 66S is collected by the water collection portion 69 and discharged from the drain port 70 to sewerage or the like via a drain pipe (not shown).

The axis of the screw 67 is the same as the axis of the dehydrator 61 and is parallel to the direction of transfer by the screw 67. In a plan view (not shown), the axis of the screw 67 is parallel to the boundary line 44 of the treatment tank 39. As shown in Fig. 1, in a side view, the axis of the screw 67 is inclined with respect to the horizontal direction. Specifically, the axis of the screw 67 is inclined such that, the downstream end in the transfer direction of both end portions of the screw 67 is higher than the upstream end. Therefore, as compared with the case where the axis of the screw 67 is horizontal, the height difference between the recovery port 71 protruding downward from the downstream end in the transfer direction of the dehydrator 61 and the lower end of the upstream end in the transfer direction of the dehydrator 61 is small. The direction in which the screw 67 transfers the crushed pieces F in the transfer space 66S is a direction in which the crushed pieces F are lifted up against gravity.

The treatment tank 39 is arranged above the dehydration device 60. The boundary line 44 of the bottom surface 41 of the treatment tank 39 is inclined so as to extend downward from the downstream end side toward the upstream end side in the transfer direction of the screw 67. As shown in Fig. 1, in a front view of the waste treatment device 10 viewed from the front, the inclination direction of the bottom surface 41 of the treatment tank 39 and the inclination direction of the upper surface of the dehydrator 61 are the same. As a result, a dead space in the vertical direction between the bottom surface 41 of the treatment tank 39 and the upper surface of the dehydrator 61 is made narrow.

The control unit 58 controls the timing of starting the water separation treatment according to the amount of thrown paper diapers D to the throwing unit 12 and the elapsed time after the throwing of the paper diaper D. The control unit 58 controls a water separation treatment time in the water separation treatment device 38 and a timing of transferring the crushed pieces F and the treatment liquid T after the water separation treatment to the dehydration device 60.

The second, third, fourth, and fifth waste treatment devices 10 each including the crushing device 25 of the first aspect can efficiently treat multiple used paper diapers D irregularly generated with a time difference. Hereinafter, the steps will be described. First, setting is performed in a treatment amount setting unit 72, a standby time setting unit 73, and a stirring setting unit 75. In the treatment amount setting unit 72, the number of thrown paper diapers D, which serves as a condition for starting the water separation treatment is set as a treatment number. In the present embodiment, the set treatment number is a number corresponding to the maximum treatment capacity of the waste treatment device 10. The present invention is not limited to this, and any number can be set. The set treatment number is not necessarily plural, and may be one. The set treatment number is input from the treatment amount setting unit 72 to the control unit 58 as the number of paper diapers D to be treated in one water separation treatment step.

In the standby time setting unit 73, a standby time, which is a condition for starting the water separation treatment, is set. This standby time is the longest time that the paper diaper D can wait until a crushing treatment is started after the paper diaper D is first thrown into the throwing unit 12 after the end of the previous water separation treatment. In the stirring setting unit 75, conditions regarding the rotation operation of the stirring member 48 are set. Specifically, the time during which the stirring member 48 continues the rotation operation, the rotation angles of the stirring member 48 in the forward direction and in the opposite direction, and the rotation speed of the stirring member 48 are set. The conditions regarding the rotation operation of the stirring member 48 set by the stirring setting unit 75 are input to the control unit 58.

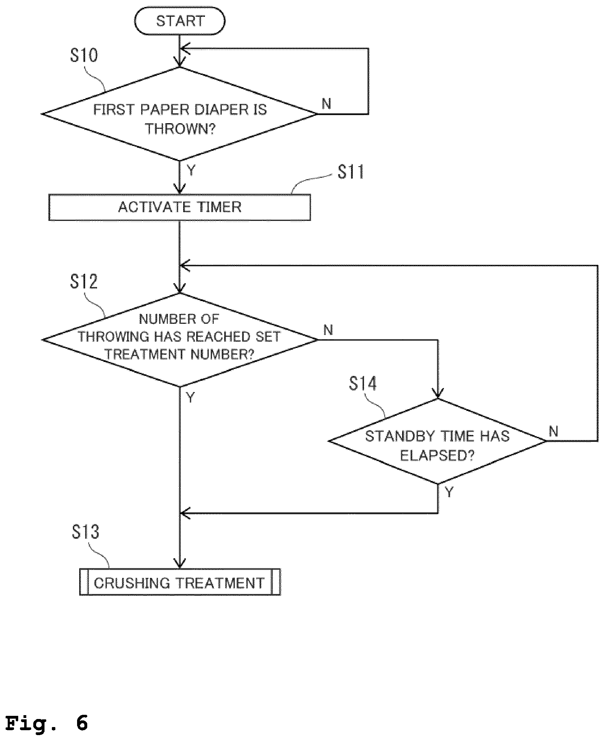

Next, in the treatment steps of the paper diaper D, a control step executed by the control unit 58 before the start of the crushing treatment will be described with reference to the flowchart of Fig. 6. After the previous water separation treatment is completed, when the used paper diaper D is first thrown into the throwing space 14 from one of the first throwing port 15 and the second throwing port 17, a detection signal is thrown from the throwing sensor 20 to the control unit 58. When the control unit 58 detects that the used paper diaper D has been first thrown into the throwing space 14 (step S10), the control unit activates a timer 74 (step S11). When the used paper diaper D is first thrown into the throwing space 14 after the previous water separation treatment is completed, the deodorizing device 21 starts the operation.

The control unit 58 compares at predetermined time intervals whether the number of thrown paper diapers D has reached the same number as the set treatment number (step S12). In a case where the number of thrown paper diapers D has reached the set treatment number, the control unit 58 starts the crushing treatment (step S13). In a case where the number of thrown paper diapers D has not reached the set treatment number, the control unit 58 determines whether the standby time set by the standby time setting unit 73 has elapsed since the paper diaper D is first thrown after the previous water separation treatment is ended (step S14). When the countdown of a timer 74 is not ended, it is determined that the standby time has not elapsed. In a case where it is determined in step S14 that the standby time has not elapsed, the control unit 58 determines again whether the number of thrown paper diapers D has reached the same number as the set treatment number (step S12). In a case where it is determined in step S12 that the number of thrown paper diapers D has reached the set treatment number, the control unit 58 starts the crushing treatment (step S13).

In step S14, in a case where the countdown of the timer 74 is ended, the control unit 58 determines that the standby time has elapsed since the paper diaper D is first thrown. When the standby time has elapsed, the control unit 58 starts the crushing treatment (step S13) even in a case where the number of thrown paper diapers D has not reached the set treatment number. Even in a case where the set treatment number is plural but there is only one thrown paper diaper D, the control unit 58 starts the crushing treatment when the standby time has elapsed. In the crushing treatment, the control unit 58 activates the crushing motor 29. After the paper diaper D is thrown, the paper diaper D is immediately crushed by the pair of shear blades 31 to become a strip-like crushed pieces F and falls into the treatment tank 39. The crushed pieces F after crushing contain the polymers P in a water-absorbed state.

The crushing members 28 may continuously rotate at all times, or may rotate only while crushing the paper diaper D. The amount of water supplied from the first water supply unit 34 is only an amount necessary for crushing and water separation treatment of one paper diaper D. While the maximum particle size of the polymers P in the water-absorbed state is about 4 mm, the width dimension of the shear blade 31 of the crushing member 28 is 6 mm or more, so that there is no possibility that the polymers P in the water-absorbed state are sheared by the shear blades 31. Since the peripheral speed of the outer periphery of the shear blade 31 is as low as 0.1 m/s or less, such a speed setting can also prevent crushing of the polymers P in the water-absorbed state. Since the width dimension of the shear blade 31 is 30 mm or less, the sheet material S of the paper diaper D can be finely sheared into a strip shape. Since the crushed pieces F having been crushed are hooked on the protrusions 32 on the outer periphery of the shear blade 31 and fitted into the recesses 33, the crushed pieces F can be reliably caused to fall into the treatment tank 39 below the crushing member 28.

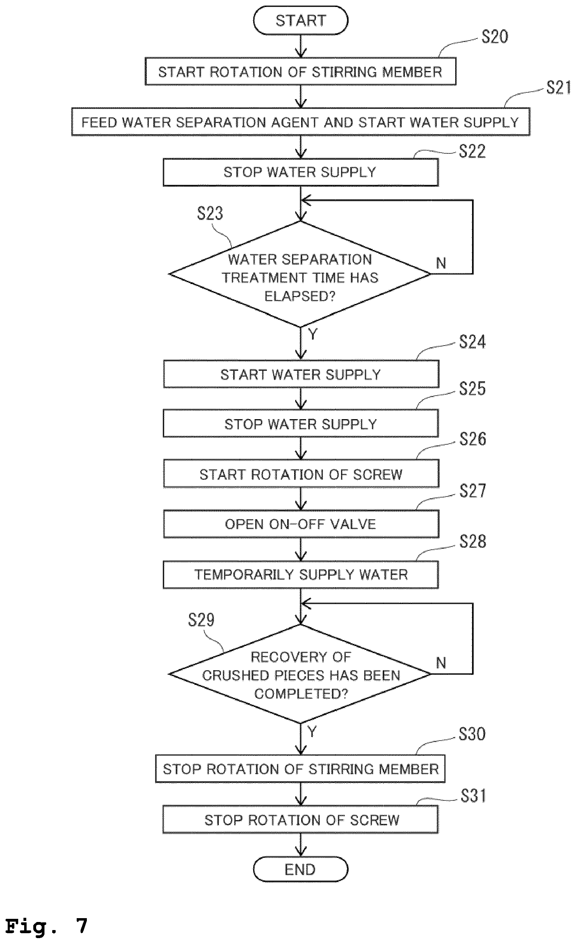

The control of the water separation treatment and the dehydration treatment by the control unit 58 will be described with reference to the flowchart of Fig. 7. The control unit 58 starts rotation of the stirring member 48 (step S20). Next, the water separation agent R made of calcium chloride is fed into the treatment tank 39, and water supply from the first water supply unit 34 is started (step S21). It is preferable that the feeding of the water separation agent R and the water supply from the first water supply unit 34 are started simultaneously. The present invention is not limited thereto, and the feeding of the water separation agent R and the water supply from the first water supply unit 34 may be performed with a time difference. The water supplied from the first water supply unit 34 washes the crushing member 28 and flows down into the treatment tank 39. After the predetermined amount of water is supplied, the water supply from the first water supply unit 34 is stopped (step S22).

The amount of the water separation agent R to be fed is controlled by the control unit 58 so as to be an appropriate amount based on the number of paper diapers D to be subjected to the water separation treatment, that is, the mass. When the water separation agent R is dissolved in the water supplied into the treatment tank 39, the treatment liquid T for a water separation treatment is obtained. In the first embodiment, the water separation agent R and the water are separately supplied to the treatment tank 39. The present invention is not limited thereto, and the treatment liquid T obtained by dissolving the water separation agent R in the water in advance may be supplied to the treatment tank 39. The water separation treatment is for lowering the water retention property of the polymers P of the crushed pieces F immersed in the treatment liquid T by the water separation agent R in the water separation liquid and separating moisture from the polymers P. The reaction rate of the water separation treatment increases as the amount of the water separation agent R increases, that is, as the concentration of the treatment liquid T increases.

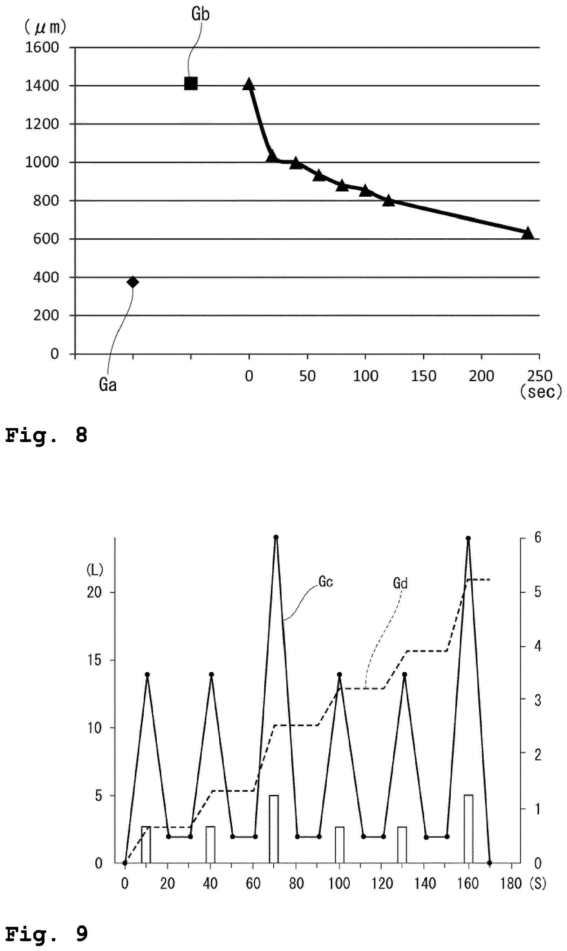

As shown in Fig. 8, as the time of the water separation treatment elapses, the particle size of the polymers P in the water-absorbed state gradually decreases, and the mass of the polymers P decreases. The mass and particle size of the polymers P are representative parameters indicating the water-absorbed state of the polymers P. The particle size of the polymers P before water absorption is about 400 µm as indicated by reference sign Ga in Fig. 8, and the mass is about 0.02 mg. The particle size of the polymers P in the water-absorbed state is about 1400 µm as indicated by reference sign Gb in Fig. 8, and the mass is about 0.8 mg. In a case where the treatment liquid T is a solution having a 1% concentration in which calcium chloride is used as the water separation agent R, when 250 seconds elapse from the start of the water separation treatment, the particle size of the polymers P decreases to about 600 µm, and the mass of the polymers P decreases to 0.06 mg. After 300 seconds elapse from the start of the water separation treatment, the particle size and mass of the polymers P remain constant.

The stirring member 48 repeats the operation of rotating in the forward direction, which is the counterclockwise direction in Fig. 4, and the operation of rotating in the opposite direction, alternately. Therefore, even if the crushed pieces F are stacked on the stirring member 48 at the start of rotation of the stirring member 48, the mountain of the crushed pieces F is broken by the movement of the stirring member 48 in both forward and opposite directions, so that the crushed pieces F are dispersed into the treatment liquid T. Since the peripheral speed of the outer periphery of the stirring member 48 is lower than 500 mm/s, the crushed pieces F and the treatment liquid T are not splashed radially.

The rotation angle of the stirring member 48 in the forward direction is 60°, whereas the rotation angle thereof in the opposite direction is 45°. Due to this difference between the forward and opposite rotation angles, the stirring member 48 intermittently rotates in the forward direction. Due to the intermittent rotation operation of the stirring member 48 in the forward direction, in a region far from the stirring member 48 in the treatment tank 39, the treatment liquid T and the crushed pieces F flow in a straightened spiral flow as a whole. In the vicinity of the stirring member 48, a turbulent flow is generated, and the treatment liquid T and the crushed pieces F finely move. By these movements, the water separation agent R comes into contact with the polymers P, and the water separation treatment proceeds.

The control unit 58 determines whether a predetermined water separation treatment time has elapsed from the start of the water separation treatment (step S23). When the predetermined water separation treatment time elapses, the water separation treatment is ended. The predetermined water separation treatment time is shorter than the time required for completely separating moisture from the polymers P. The particle size and mass of the polymers P at the time when the water separation treatment time elapses are larger than the particle size and mass of the polymers P when the water separation has been completely performed.

When the water separation treatment is ended, the control unit 58 starts water supply from the first water supply unit 34 and the second water supply unit 54 to the treatment tank 39 (step S24). The water supply reduces the concentration of the treatment liquid T in the treatment tank 39, so that the progress of the water separation treatment by the water separation agent R is stopped. During this time, the polymers P are in an irreversible state. When the water supply to the treatment tank 39 proceeds to a certain extent, the water supply to the treatment tank 39 is stopped (step S25). Thereafter, the control unit 58 rotates the stirring member 48 forward (rotates the stirring member 48 in the forward direction), start the rotation of the screw 67 (step S26), and then opens the on-off valve 65 (step S27).

When the on-off valve 65 is opened, the treatment liquid T and the crushed pieces F in the treatment tank 39 are discharged from the discharge port 47. In the process of discharging the treatment liquid T and the crushed pieces F from the discharge port 47, the stirring member 48 continues to rotate forward. Since the viscosity of the treatment liquid T has been lowered by the water supply from the first water supply unit 34 and the second water supply unit 54, the flow resistance is small, so that the treatment liquid T is smoothly discharged from the discharge port 47. The flow direction of the discharge flow at the discharge port 47 is parallel to the boundary line 44 between the first inclined surface 42 and the second inclined surface 43. In the vortex flow generated by the stirring member 48, a part of the flow in the region in contact with the boundary line 44 is directed to the discharge port 47 in parallel to the boundary line 44. Therefore, the flow velocity of the discharge flow at the discharge port 47 is increased. When the on-off valve 65 is opened, water is temporarily supplied from the second nozzle 55 of the second water supply unit 54 toward the discharge port 47 (step S28). This water supply increases the flow velocity of the discharge flow from the discharge port 47.

In the process in which the treatment liquid T and the crushed pieces F in the treatment tank 39 are discharged through the discharge path 64, the control unit 58 controls the opening/closing operation of the on-off valve 65 and the water supply operation of the second water supply unit 54. An example of the control mode will be described with reference to the graph of Fig. 9. The horizontal axis of the graph represents the elapsed time from the start of opening of the on-off valve 65 in seconds. A polygonal line Gc represents a change in the opening degree of the on-off valve 65. As to the opening degree of the on-off valve 65, the opening degree when the on-off valve 65 is fully opened is indicated as 6 on the vertical axis on the right side of the graph. A vertically long bar represents the flow quantity of the discharge flow when the opening degree of the on-off valve 65 is increased. The value of the flow quantity is shown on the vertical axis on the left side, and the unit is liter. A polygonal line Gd represents the cumulative flow quantity of the discharge path 64 after the on-off valve 65 is opened.

The control unit 58 changes the opening degree of the on-off valve 65 with time in the discharge process in the discharge path 64. In 10 seconds after the on-off valve 65 is started to be opened, the opening degree of the on-off valve 65 is increased to about 60% of the fully opened state. During this time, the flow quantity in the discharge path 64 increases, and the crushed pieces F and the treatment liquid T flow out to the dehydration device 60 side. Thereafter, in 10 seconds, the opening degree is reduced to a state close to a fully closed state. In a state where the opening degree is reduced, the flow quantity in the discharge path 64 is reduced to a value close to 0. The state in which the opening degree is reduced is maintained for 10 seconds, and then the opening degree is increased to 60% of the fully opened state to increase the flow quantity in the discharge path 64.

Thereafter, the opening degree is reduced again in 10 seconds, and the reduced state is maintained for 10 seconds. Thereafter, in 10 seconds, the opening degree of the on-off valve 65 is increased to a fully opened state. In the fully opened state, the flow quantity of the discharge path 64 is larger than that at the opening degree of about 60%. In the fully opened state, water is discharged from the second nozzle 55 of the second water supply unit 54 toward the discharge port 47. As a result, the flow velocity in the discharge path 64 increases. After the on-off valve 65 is fully opened, the opening degree is reduced to near the fully closed state over 10 seconds. Thereafter, the operation of increasing the opening degree to about 60% twice and then increasing to the fully opened state once, as described above, is repeated.

When the increase and decrease of the opening degree of the on-off valve 65 are repeated, the maximum peak of the opening degree of the on-off valve 65 is repeated a plurality of times. In this process, the opening degree at the maximum peak that is accompanied by discharge of water from the second water supply unit 54 is full. On the other hand, the opening degree at the maximum peak not accompanied by discharge of water from the second water supply unit 54 is about 60%, and is smaller than the opening degree at the peak accompanied by water supply from the second water supply unit 54. Therefore, a fluctuation range of the flow velocity in the discharge path 64 is large. By repeating the increase and decrease of the opening degree of the on-off valve 65 in this manner, the flow of the crushed pieces F and the treatment liquid T in the discharge path 64 becomes a turbulent state. In the turbulent state, the crushed pieces F are not easily entangled with each other in the discharge path 64, and the crushed pieces F are less likely to concentrate at the inlet of the on-off valve 65. Therefore, the crushed pieces F do not get stuck in the on-off valve 65. Since the on-off valve 65 is not fully closed, the strip-like elements of the paper diaper D are not caught and stuck in the on-off valve 65.

The treatment liquid T and the crushed pieces F discharged from the discharge port 47 are transferred into the dehydrator 61 through the discharge path 64. In the dehydrator 61, the crushed pieces F containing the treatment liquid T are pushed by the feed plate 67B of the screw 67 and compressed in the axial direction, so that the moisture in the crushed pieces F oozes out. The moisture having oozed out passes through the mesh of the dehydration filter 66 and is discharged from the drain port 70. The crushed pieces F containing the polymers P pushed by the screw 67 are recovered from the recovery port 71.

In the dehydration filter 66, since a part of the polymers P comes into contact with the inner peripheral surface of the dehydration filter 66, there is a concern that the polymers P may pass through the mesh of the dehydration filter 66. However, in the crushing device 25, since the peripheral speed of the shear blade 31 is set to a low speed of 0.1 m/s and the width dimension of the shear blade 31 is set to 6 mm or more which is larger than the particle size of the polymers P in the water-absorbed state, the polymers P in the water-absorbed state fall into the treatment tank 39 of the water separation treatment device 38 remaining as large particles without being sheared. Furthermore, in the water separation treatment device 38, since the water separation treatment is ended before moisture is completely separated from the polymers P, the particle size of the polymers P is maintained in a state of having a certain size. Therefore, there is no possibility that the polymers P pass through the mesh of the dehydration filter 66.

When the recovery of the crushed pieces F from the recovery port 71 has been completed (step S29), the control unit 58 stops the rotation of the stirring member 48 (step S30) and stops the rotation of the screw 67 (step S31). The deodorizing device 21 also stops the operation. Thus, the water separation treatment and the dehydration treatment are finished. After the recovery of the crushed pieces F from the recovery port 71 is completed, the user may operate the operation unit to stop the rotation of the stirring member 48, the rotation of the screw 67, and the operation of the deodorizing device 21.

The crushing device 25 includes the housing 13 into which the paper diaper D as an object to be crushed containing the polymers P in the water-absorbed state is thrown, and the crushing member 28 that is accommodated in the housing 13 and crushes the paper diaper D. The moving speed of the crushing member 28 is 0.1 m/s or less. When the paper diaper D is crushed by the shear blades 31 moving at a speed of 0.1 m/s or less, the polymers P in the water-absorbed state contained in the paper diaper D pass through the crushing device 25 almost without being crushed. Therefore, after the crushing treatment, the polymers P can be recovered by the dehydration filter 66 in the dehydration device 60.

The crushing member 28 is rotatable about the rotation shaft 30. The shear blades 31 are formed on the outer periphery of the crushing member 28. The moving speed of the crushing member 28 is a peripheral speed of a tooth tip of the shear blade 31 during rotation of the crushing member 28. The peripheral speed of the tooth tip of the shear blade 31 is 0.1 m/s or less. Since the paper diaper D is delivered in the rotation direction of the crushing members 28 while being crushed by the shear blades 31, the paper diaper D easily passes through the crushing members 28 as compared with the case where the shear blades 31 reciprocate in parallel.

The two rotation shafts 30 are arranged in parallel to each other. The object to be crushed is crushed between the shear blade 31 of one rotation shaft 30 and the shear blade 31 of the other rotation shaft 30. Since the paper diaper D is bitten between the two shear blades 31, the paper diaper D can be reliably crushed. Since the shear blade 31 of one rotation shaft 30 and the shear blade 31 of the other rotation shaft 30 are arranged side by side in the axial direction of the rotation shaft 30, the paper diaper D can be reliably crushed between the two shear blades 31.

The rotation directions of the two rotation shafts 30 are opposite to each other. The portions of the shear blade 31 of one rotation shaft 30 and the shear blade 31 of the other rotation shaft 30 that are close to each other move in the same direction, that is, downward. The crushed pieces F of the paper diaper D can reliably pass through the crushing device 25 by being delivered by the two shear blades 31. The shear blade 31 has the recesses 33 formed by recessing the outer peripheral surface of the shear blade 31. The crushed pieces F of the sheared paper diaper D can reliably pass through the crushing device 25 by being caught in the recesses 33.

The shear blades 31 are arranged adjacent to each other in a direction intersecting the moving direction of the shear blades 31, that is, in the axial direction of the rotation shaft 30. The width dimension of the shear blade 31 in the arrangement direction is 6 mm or more. Since the maximum outer diameter of the polymers P in the water-absorbed state is about 4 mm, the polymers P can be prevented from being crushed by the shear blades 31. The plurality of shear blades 31 are arranged adjacent to each other in the direction intersecting the moving direction of the shear blades 31, and the width dimension of the shear blades 31 in the arrangement direction is 30 mm or less. In a case where the paper diaper D contains the sheet material S, the crushed pieces F of the sheet material S can be made into small pieces, so that the treatment of the crushed pieces F is easy.

The waste treatment devices 10 of the second, third, fourth, and fifth aspects each including the crushing device 25 of the first aspect each include the throwing unit 12, the crushing device 25, and the control unit 58. The paper diaper D containing the polymers P in the water-absorbed state is thrown into the throwing unit 12. The crushing device 25 performs treatment for crushing the thrown paper diaper D. The control unit 58 starts the crushing treatment of the crushing device 25 on condition that the amount of thrown paper diapers D to the throwing unit 12 has reached a predetermined amount. The plurality of paper diapers D thrown to the throwing unit 12 with a time difference can be crushed together. Therefore, regarding the treatment of the paper diaper D that is thrown later, it is not necessary to wait until the crushing treatment of the paper diaper D that is thrown earlier is ended, and thus the crushing treatment is performed efficiently.

The predetermined amount by which the control unit 58 starts the crushing treatment is an amount corresponding to the maximum treatment capacity of the water separation treatment device 38. Since the treatment capacity of the water separation treatment device 38 is fully utilized, the number of times of the water separation treatment can be reduced. The waste treatment device 10 includes the treatment amount setting unit 72 capable of changing the predetermined amount. Since the amount of the paper diapers D to be subjected to the water separation treatment at one time can be appropriately set according to the frequency of throwing the paper diaper D and the like, the efficiency of the water separation treatment can be enhanced.

The waste treatment devices 10 of the second, third, fourth, and fifth aspects each including the crushing device 25 of the first aspect are each installed in a wide building or a multi-story building such as a nursing home. Since the throwing unit 12 has the first throwing port 15 and the second throwing port 17, the number of throwing units 12 can be reduced. Since the paper diapers D thrown from the plurality of throwing ports are subjected to the water separation treatment in the common water separation treatment device 38, the number of water separation treatment devices 38 can be reduced.

The control unit 58 starts the crushing treatment of the crushing device 25 on condition that a predetermined standby time has elapsed since the first throwing of the object to be treated after the end of the water separation treatment. Even if the amount of thrown paper diapers D to the throwing unit 12 has not reached the predetermined amount, the crushing treatment is started when a predetermined standby time has elapsed after the paper diaper D is first thrown after the crushing treatment. Since there is no possibility that the paper diaper D is left for a long time without being subjected to the water separation treatment, it is possible to avoid an unpleasant situation caused by the odor of the paper diaper D.

The second, third, fourth, and fifth waste treatment devices 10 each including the crushing device 25 of the first aspect each include the standby time setting unit 73 capable of changing a predetermined standby time. The standby time of the untreated paper diaper D can be appropriately set according to the frequency of throwing the paper diaper D and the like. It is possible to avoid an unpleasant situation caused by the odor of the untreated paper diaper D without reducing the efficiency of the water separation treatment.

The water separation treatment device 38 of each of the waste treatment devices 10 of the second, third, fourth, and fifth aspects each including the crushing device 25 of the first aspect each includes the treatment tank 39 and the stirring member 48 rotatably provided in the treatment tank 39. The treatment tank 39 can store the crushed pieces F of the paper diaper D having the polymers P in the water-absorbed state and the treatment liquid T for reducing the water retention capacity of the polymers P. The stirring member 48 includes the disk-shaped main body 51 and the ribs 52 protruding from the surface of the main body 51. The ribs 52 extend in the radial direction from the rotation center of the main body 51.

The paper diaper D subjected to the crushing treatment which is thrown into the treatment tank 39 is stirred by the stirring member 48 together with the treatment liquid T. By stirring, the water retention capacity of the polymers P is reduced by the treatment liquid T, and the moisture retained in the polymers P is separated from the polymers P. Since the stirring member 48 has a form in which the ribs 52 extending in the radial direction are protrudingly formed on the surface of the rotating disk-shaped main body 51, the crushed pieces F are not entangled with the stirring member 48 even though the crushed pieces F of the paper diaper D have a strip shape.

The stirring member 48 is arranged on the bottom surface 41 of the treatment tank 39 and is rotatable about the drive shaft 49 extending in the vertical direction. The ribs 52 protrude from the upper surface of the main body 51. Since the height dimension of the stirring member 48 is small, the stirring member 48 exhibits a sufficient stirring function even when the amount of the crushed pieces F and the treatment liquid T thrown into the treatment tank 39 is small.

Since the stirring member 48 is rotatable in both the forward direction and the opposite direction, the stirring member 48 can exhibit a sufficient stirring function even if the crushed pieces F of the paper diaper D are stacked on the upper surface of the stirring member 48. Since the rotation angle of the stirring member 48 in the forward direction and the rotation angle of the stirring member 48 in the opposite direction are 10° or more and 120° or less, it is possible to prevent the crushed pieces F of the paper diaper D from being entangled with the stirring member 48.

Since the stirring member 48 is alternately rotatable in the forward direction and in the opposite direction, it is possible to prevent the crushed pieces F of the paper diaper D from being caught on the stirring member 48. The rotation angle of the stirring member 48 in the forward direction is larger than the rotation angle of the stirring member 48 in the opposite direction. Even when the rotation direction of the stirring member 48 is alternately switched to the forward direction and to the opposite direction, the rotation operation of the stirring member 48 proceeds in the forward direction. The crushed pieces F and the treatment liquid T in the treatment tank 39 are stirred so as to rotate in one direction as a whole. The rotation time of the stirring member 48 in the forward direction is longer than the rotation time of the stirring member 48 in the opposite direction. Due to the difference in the rotation time between the forward direction and the opposite direction, it is possible to prevent the crushed pieces F of the paper diaper D from being entangled with the stirring member 48.

The peripheral speed of the outer periphery of the stirring member 48 is 100 to 500 mm/s. With this peripheral speed, the stirring member 48 can exhibit a sufficient stirring function. At this peripheral speed, the crushed pieces F and the treatment liquid T are not splashed by the rotation of the stirring member 48.

The treatment tank 39 has the discharge port 47 for discharging the crushed pieces F and the treatment liquid T in the treatment tank 39. In the flow generated by the rotation of the stirring member 48 at the time of discharge from the discharge port 47, the flow line 48L of the flow toward the discharge port 47 is substantially parallel to the flow line 47L of the discharge flow at the discharge port 47 or overlaps the flow line 47L. The crushed pieces F and the treatment liquid T can be effectively discharged.

The discharge port 47 is opened so as to face the peripheral edge portion of the bottom surface 41 of the treatment tank 39. The stirring member 48 is arranged at a position closer to the discharge port 47 than to the center of the bottom surface 41 of the treatment tank 39. Since the flow generated by the stirring member 48 strongly flows into the discharge port 47, it is possible to prevent the paper diaper D from being stuck in the discharge port 47.

The bottom surface 41 of the treatment tank 39 includes the first inclined surface 42 which supports the stirring member 48, and the second inclined surface 43 continuous with the boundary line 44 which is a lowermost end edge of the first inclined surface 42. The inclination angle α of the first inclined surface 42 with respect to the horizontal plane H is smaller than the inclination angle β of the second inclined surface 43 with respect to the horizontal plane H. Even when the amount of the treatment liquid T is small, the stirring member 48 can be immersed in the treatment liquid T. Even when the crushed pieces F of the paper diaper D are placed on the second inclined surface 43, the crushed pieces F slide down toward the first inclined surface 43 due to the inclination of the second inclined surface 42.

The waste treatment devices 10 of the second, third, fourth, and fifth aspects each including the crushing device 25 of the first aspect each include the discharge port 47 for discharging the crushed pieces F and the treatment liquid T in the treatment tank 39, the first water supply unit 34, and the second water supply unit 54. The first water supply unit 34 and the second water supply unit 54 supply water to the treatment tank 39 when the discharge from the discharge port 47 is performed. When water is supplied from the first water supply unit 34 and the second water supply unit 54 to the treatment tank 39, the concentration of the treatment liquid T is reduced, so that the flow velocity of the discharge flow at the discharge port 47 increases, and the discharge efficiency is improved. Since the second water supply unit 54 includes the second nozzle 55 which discharges water toward the discharge port 47, the discharge efficiency is further improved.

The waste treatment devices 10 of the second, third, fourth, and fifth aspects each including the crushing device 25 of the first aspect each include the water separation treatment device 38, the dehydration device 60, and the control unit 58. The water separation treatment device 38 performs the water separation treatment for separating moisture from the polymers P in the water-absorbed state by the treatment liquid T for reducing the water retention capacity of the polymers P. The dehydration device 60 separates the treatment liquid T and the polymers P transferred from the water separation treatment device 38, by the dehydration filter 66. The on-off valve 65 is provided in the discharge path 64 which transfers the treatment liquid T and the polymers P in the water separation treatment device 38 to the dehydration device 60. The control unit 58 supplies water to reduce the concentration of the treatment liquid T, and then opens the on-off valve 65. The control unit 58 performs control for opening the on-off valve 65 and transferring the polymers P in the water separation treatment device 38 to the dehydration device 60 in a state where the polymers P immersed in the treatment liquid T have a larger representative parameter indicating the degree of water absorption than the polymers P before water absorption.

The representative parameter indicating the degree of water absorption includes the mass of the polymers P in the water-absorbed state. Since the polymers P during the water separation treatment are transferred to the dehydration device 60 in a state of being heavier than the polymers P before water absorption, the polymers P shift to the water separation treatment step by the filter in a state of having a relatively large particle size. Therefore, the polymers P can be easily recovered by the filter.

The representative parameter indicating the degree of water absorption includes the particle size of the polymers P in the water-absorbed state. The control unit 58 transfers the polymers P in the water separation treatment device 38 to the dehydration device 60 in a state where the particle size of the polymers P immersed in the treatment liquid T is larger than the particle size of the polymers P before water absorption. According to this configuration, since the polymers P during the water separation treatment are transferred to the dehydration device 60 in a state where the particle size of the polymers P is larger than that of the polymers P before water absorption, the polymers P can be easily recovered by the filter.

The control unit 58 transfers the polymers P in the water separation treatment device 38 to the dehydration device 60 based on the elapsed time of the water separation treatment. During the water separation treatment, the amount of moisture separated from the polymers P increases with the lapse of time, and the particle size of the polymers P decreases. Since the particle size of the polymers P can be estimated based on the elapsed time of the water separation treatment, it is possible to shift to the dehydration treatment without confirming the mass and the particle size of the polymers P.

The water separation treatment device 38 includes the treatment tank 39 which stores the polymers P and the treatment liquid T and performs the water separation treatment, the first water supply unit 34, and the second water supply unit 54. The first water supply unit 34 and the second water supply unit 54 supply water to the treatment tank 39 before the polymers P subjected to the water separation treatment and the treatment liquid T are transferred to the dehydration device 60. After the water separation treatment is finished, the concentration of the treatment liquid T is reduced by the supply of water from the first water supply unit 34 and the second water supply unit 54. As a result, the progress of water separation from the polymers P is inhibited, and the particle size of the polymers P in the dehydration step can be kept large. Since the viscosity of the treatment liquid T is reduced, transfer from the water separation treatment device 38 to the dehydration device 60 can be smoothly performed.

The waste treatment devices 10 of the second, third, fourth, and fifth aspects each including the crushing device 25 of the first aspect each include the treatment tank 39 in which the crushed pieces F of the paper diaper D as the object to be treated containing the polymers P in the water-absorbed state and the treatment liquid T for reducing the water retention capacity of the polymers P are stored. The discharge port 47 for discharging the crushed pieces F and the treatment liquid T in the treatment tank 39 is opened on the side surface of the treatment tank 39. Since the discharge port 47 is opened not on the bottom surface 41 of the treatment tank 39 but on the side surface of the treatment tank 39, lightweight fragments of the crushed pieces F having a specific gravity smaller than that of the treatment liquid T are discharged together with the treatment liquid T from the discharge port 47 while the treatment liquid T remains in the treatment tank 39. The crushed pieces F of the paper diaper D in the treatment tank 39 can be discharged without remaining on the bottom surface 41 of the treatment tank 39.

The height dimension from the bottom surface 41 of the treatment tank 39 to the liquid surface at the time of maximum storage of the treatment liquid T is within 3 times the height from the bottom surface 41 of the treatment tank 39 to the uppermost end of the discharge port 47. According to this dimension setting, the water level of the treatment liquid T stored in the treatment tank 39 can be made relatively low to secure a large area of the liquid surface of the treatment liquid T, so that uneven distribution of lightweight fragments floating on the liquid surface of the treatment liquid T can be reduced. This makes it possible to prevent the lightweight fragments from remaining on the bottom surface 41 of the treatment tank 39.

Since the width dimension of one shear blade 31 is 30 mm or less, the width dimension of the crushed pieces F sheared by the shear blades 31 is about 30 mm at the maximum. Focusing on this point, the height dimension of the opening region of the discharge port 47 is set to 50 mm or more. With this dimension setting, the lightweight fragments can be reliably discharged from the discharge port 47 to the outside of the treatment tank 39.

The stirring member 48 is rotatably provided on the bottom surface 41 of the treatment tank 39. In the flow generated by the rotation of the stirring member 48 at the time of discharge from the discharge port 47, the flow line 48L of the flow toward the discharge port 47 is substantially parallel to the flow line 47L of the discharge flow at the discharge port 47 or overlaps the flow line 47L. According to this configuration, the lightweight fragments can be reliably discharged from the discharge port 47.

Since the stirring member 48 is arranged at a position closer to the discharge port 47 than to the center of the bottom surface 41 of the treatment tank 39, the flow generated by the stirring member 48 strongly flows into the discharge port 47. Thus, the lightweight fragments can be reliably discharged from the discharge port 47.

Since the bottom surface 41 of the treatment tank 39 is inclined downward toward the discharge port 47, the lightweight fragments can be reliably discharged from the discharge port 47. The treatment tank 39 has the second nozzle 55 that discharges water toward the discharge port 47. Since the flow velocity of the discharge flow at the discharge port 47 is increased by the water discharged from the second nozzle 55, the lightweight fragments can be reliably discharged.

The waste treatment devices 10 of the second, third, fourth, and fifth aspects each including the crushing device 25 of the first aspect each include the treatment tank 39 and the dehydration device 60. The treatment tank 39 stores the crushed pieces F of the paper diaper D as an object to be treated containing the polymers P in the water-absorbed state, and the treatment liquid T for reducing the water retention capacity of the polymers P. The dehydration device 60 separates the crushed pieces F and the treatment liquid T discharged from the treatment tank 39 while moving the crushed pieces F and the treatment liquid T laterally, that is, in the left-right direction, by the screw 67 as a transfer member. At the downstream end in the transfer direction of the screw 67, the dehydrated crushed pieces F are recovered from the downward recovery port 71.

The dehydration device 60 is arranged in an inclined manner such that the downstream end in the transfer direction of the screw 67 is higher than the upstream end in the transfer direction. According to this configuration, since the height difference between the position of the downward recovery port 71 and the position of the upstream end in the transfer direction of the dehydration device 60 is reduced, the dehydration device 60 can be installed at a low position as a whole. As a result, the height of the waste treatment device 10 can be reduced.

The direction in which the crushed pieces F are transferred by the transfer member in the dehydration device 60 is a direction in which the crushed pieces F are lifted up against gravity. Therefore, as the transfer member, the screw 67 in which the spiral feed plate 67B is formed on the outer periphery of the rotating shaft portion 67A is used. The crushed pieces F are reliably fed to the recovery port 71 while being raised by the helical feed plate 67B.

The treatment tank 39 is arranged above the dehydration device 60, and the bottom surface 41 of the treatment tank 39 is inclined so as to extend downward from the downstream end side toward the upstream end side in the transfer direction of the screw 67. In a front view of the waste treatment devices 10 of the second, third, fourth, and fifth aspects each including the crushing device 25 of the first aspect as viewed from the front, the inclination direction of the bottom surface 41 of the treatment tank 39 and the inclination direction of the dehydration device 60 are the same. As a result, since the dead space in the vertical direction between the bottom surface 41 of the treatment tank 39 and the upper surface of the dehydration device 60 is narrowed, the height of the entire waste treatment device 10 can be reduced accordingly.

The dehydration device 60 includes the water collection portion 69 which receives a waste liquid such as the treatment liquid T flowing down in the process of transferring the crushed pieces F by the screw 67. The water collection portion 69 is provided so as to open at least toward the upstream end portion in the transfer direction of the transfer path by the screw 67. As a result, the waste liquid such as the treatment liquid T flowing down is collected in the water collection portion 69 without remaining in the middle of the transfer path by the screw 67.

The waste treatment devices 10 of the second, third, fourth, and fifth aspects each including the crushing device 25 of the first aspect each include the treatment tank 39, the discharge path 64, the on-off valve 65, and the control unit 58. The treatment tank 39 stores the crushed pieces F of the paper diaper D containing the polymers P in the water-absorbed state, and the treatment liquid T for reducing the water retention capacity of the polymers P. The discharge path 64 is a path for discharging the crushed pieces F and the treatment liquid T in the treatment tank 39 to the outside of the treatment tank 39. The on-off valve 65 is provided in the middle of the discharge path 64. The control unit 58 changes the opening degree of the on-off valve 65 with time in the discharge process in the discharge path 64. Since the flow velocity in the discharge path 64 changes with time as the opening degree of the on-off valve 65 changes with time, the crushed pieces F can be prevented from being stuck in the on-off valve 65.

The control unit 58 controls the on-off valve 65 not to be fully closed at the minimum opening degree. Since the on-off valve 65 is not fully closed, the crushed pieces F are not stuck at the upstream side of the on-off valve 65 in the discharge path 64.

The treatment tank 39 includes the discharge port 47 communicating with the discharge path 64, and the second water supply unit 54 which discharges water toward the discharge port 47. The discharge of water by the second water supply unit 54 is controlled by the control unit 58 in the discharge process in the discharge path 64. When water is discharged from the second water supply unit 54 toward the discharge port 47 during the discharge of the crushed pieces F and the treatment liquid T, the flow velocity in the discharge path 64 increases, so that the discharge efficiency is improved.

The second water supply unit 54 is controlled by the control unit 58 to discharge water when the opening degree of the on-off valve 65 increases. When water is discharged from the second water supply unit 54 when the opening degree of the on-off valve 65 increases, the flow velocity in the discharge path 64 increases, so that the discharge efficiency is improved. The opening degree of the on-off valve 65 is controlled by the control unit 58 such that the on-off valve 65 is fully opened when water is discharged from the second water supply unit 54. Since water is discharged in a state where the on-off valve 65 is fully opened, the flow rate in the discharge path 64 can be greatly increased.

In the process in which the maximum peak of the opening degree is repeated a plurality of times in association with the increase and decrease of the opening degree of the on-off valve 65, the opening degree of the on-off valve 65 is controlled by the control unit 58 such that the opening degree at the maximum peak accompanied by discharge of water from the second water supply unit 54 is larger than the opening degree at the maximum peak not accompanied by discharge of water from the second water supply unit 54. Since the maximum peak value of the opening degree of the on-off valve 65 is made different between when water is discharged and when water is not discharged, the fluctuation range of the flow velocity in the discharge path 64 is large. As a result, entanglement between the crushed pieces F and concentration of the crushed pieces F in the inlet of the on-off valve 65 are less likely to occur, so that clogging of the on-off valve 65 can be more reliably prevented.

### <Other embodiments>

The crushing device of the first aspect is not limited to the first embodiment described with reference to the above description and drawings, and for example, the following embodiments are also included in the technical scope of the first crushing device.

The crushing member may be configured such that the shear blades reciprocate in parallel.

The number of rotation shafts of the crushing members may be only one.

The shape of the crushing member when viewed in the axial direction of the rotation shaft is not limited to a substantially circular shape, and may be a polygonal shape or a non-point-symmetric shape.

The two shear blades may be arranged at the same position in the axial direction of the rotation shaft. In this case, the rotation directions of the two rotation shafts may be the same direction or opposite direction.

The shear blade may have no recess on the outer peripheral surface.

The rotation speeds of the two rotation shafts may be different from each other.

The width dimension of the shear blade may be less than 6 mm.

The width dimension of the shear blade may be larger than 30 mm.

The object to be crushed may be other than the paper diaper.

The crushing device is not limited to one constituting the waste treatment device, and may be one used alone.

The object to be treated is not limited to the paper diaper, and may be an object containing superabsorbent polymers, such as a sanitary product or a pet sheet.

The water separation agent may be a treatment agent containing calcium acetate, another medical agent containing a divalent metal salt such as Ca or Mg, magnesium chloride, a water-soluble alkaline earth metal salt of magnesium nitrate, or the like.

The waste treatment device of the second aspect is not limited to the first embodiment described with reference to the above description and drawings, and may be, for example, the following embodiment.

Before the polymers subjected to the water separation treatment and the treatment liquid are transferred to the dehydration device, water may not be supplied to the treatment tank.

The object to be treated is not limited to the paper diaper, and may be an object containing superabsorbent polymers, such as a sanitary product or a pet sheet.

The water separation agent may be a treatment agent containing calcium acetate, another medical agent containing a divalent metal salt such as Ca or Mg, magnesium chloride, a water-soluble alkaline earth metal salt of magnesium nitrate, or the like.

The waste treatment device of the third aspect is not limited to the first embodiment described with reference to the above description and drawings, and may be, for example, the following embodiment.

The stirring member may be arranged on the side surface of the treatment tank and rotate about a lateral drive shaft.

The stirring member may rotate only in one direction.

The rotation mode of the stirring member is not limited to the alternate rotation in the forward direction and in the opposite direction, but rotation in the forward direction and intermittent rotation in the opposite direction for a plurality of times may be combined.

The rotation angle of the stirring member in the forward direction may be less than 10° or larger than 120°.

The rotation angle of the stirring member in the opposite direction may be less than 10° or larger than 120°.

The rotation angle of the stirring member in the forward direction and the rotation angle of the stirring member in the opposite direction may be the same.

The rotation time of the stirring member in the forward direction and the rotation time of the stirring member in the opposite direction may be the same.

The peripheral speed of the outer periphery of the stirring member may be less than 100 mm/s or may be faster than 500 mm/s.

The flow line of the flow generated by the stirring member toward the discharge port at the time of discharge from the discharge port may be in a direction intersecting the flow line of the discharge flow at the discharge port.

The discharge port may be opened to the bottom surface of the treatment tank.

The stirring member may be arranged at the center of the bottom surface of the treatment tank.

The bottom surface of the treatment tank may be constituted by a single plane having a constant inclination angle with respect to the horizontal plane.

The nozzle of the water supply unit may discharge water toward a direction different from the discharge port.

The object to be treated is not limited to the paper diaper, and may be an object containing superabsorbent polymers, such as a sanitary product or a pet sheet.

The water separation agent may be a treatment agent containing calcium acetate, another medical agent containing a divalent metal salt such as Ca or Mg, magnesium chloride, a water-soluble alkaline earth metal salt of magnesium nitrate, or the like.

The waste treatment device of the fourth aspect is not limited to the first embodiment described with reference to the above description and drawings, and may be, for example, the following embodiment.

The depth of the treatment tank may be three times or more the height from the bottom surface of the treatment tank to the uppermost end of the discharge port.

The position of the lowermost end of the discharge port may be a position higher than the bottom surface of the treatment tank.

The height dimension of the discharge port may be smaller than 50 mm.

The bottom surface of the treatment tank may be horizontal.

The stirring member may be arranged at a central position on the bottom surface of the treatment tank, or may be arranged at a position farther from the discharge port than the center of the bottom surface of the treatment tank.

The second nozzle that discharges water toward the discharge port may not be provided.

The waste treatment device of the fifth aspect is not limited to the first embodiment described with reference to the above description and drawings, and may be, for example, the following embodiment.

The on-off valve is not limited to a ball valve, and may be an on-off valve of another form.

The on-off valve may be controlled to be fully closed at the minimum opening degree.

A change form of the opening degree of the on-off valve is not limited to a form in which the opening degree is repeatedly increased and decreased, but may include a form in which a constant opening degree is maintained after the opening degree is increased and then the opening degree is further increased, and a form in which a constant opening degree is maintained after the opening degree is decreased and then the opening degree is further decreased.

During discharge of the crushed pieces and the treatment liquid, water may not be discharged from the second water supply unit toward the discharge port.

The second water supply unit may constantly discharge water regardless of the opening degree of the on-off valve.

The opening degree at the maximum peak accompanied by discharge of water from the second water supply unit may be the same as the opening degree at the maximum peak not accompanied by discharge of water from the second water supply unit, or may be smaller than the opening degree at the maximum peak not accompanied by discharge of water from the second water supply unit.

The on-off valve may not be fully opened when water is discharged from the water supply unit.

## Claims

1. A crushing device comprising:
a housing into which an object to be crushed containing polymers in a water-absorbed state is thrown; and
a crushing member that is accommodated in the housing and crushes the object to be crushed,
wherein a moving speed of the crushing member is 0.1 m/s or less.

2. The crushing device according to claim 1, wherein
the crushing member is rotatable about a rotation shaft,
a shear blade is formed on an outer periphery of the crushing member,
the moving speed is a peripheral speed of a tooth tip of the shear blade during rotation of the crushing member, and
the peripheral speed of the tooth tip of the shear blade is 0.1 m/s or less.

3. The crushing device according to claim 2, wherein
the two rotation shafts are parallel to each other,
the shear blade of one of the rotation shafts and the shear blade of the other of the rotation shafts are arranged side by side in an axial direction of the rotation shafts,
the shear blade has a recess formed by recessing an outer peripheral surface of the shear blade, and
the object to be crushed is crushed between the shear blade of the one of the rotation shafts and the shear blade of the other of the rotation shafts.

4. The crushing device according to claim 3, wherein rotation directions of the two rotation shafts are opposite to each other.

5. The crushing device according to any one of claims 1 to 4, wherein
a plurality of the shear blades are arranged adjacent to each other in a direction intersecting a moving direction of the shear blades, and
a width dimension of the shear blades in an arrangement direction is 6 mm or more.

6. The crushing device according to any one of claims 1 to 5, wherein
a plurality of the shear blades are arranged adjacent to each other in a direction intersecting a moving direction of the shear blades, and
a width dimension of the shear blades in an arrangement direction is 30 mm or less.

7. A waste treatment device comprising:
a water separation treatment device that performs a water separation treatment for separating moisture from polymers in a water-absorbed state by a treatment liquid for reducing a water retention capacity of the polymers;
a dehydration device that separates the treatment liquid and the polymers transferred from the water separation treatment device, by a filter; and
a control unit that performs control for transferring the polymers in the water separation treatment device to the dehydration device in a state where the polymers immersed in the treatment liquid have a larger representative parameter indicating a degree of water absorption than the polymers before water absorption.

8. The waste treatment device according to claim 7, wherein the representative parameter includes a mass of the polymers in the water-absorbed state.

9. The waste treatment device according to any one of claims 7 and 8, wherein the representative parameter includes a particle size of the polymers in the water-absorbed state.

10. The waste treatment device according to any one of claims 7 to 9, wherein the control unit transfers the polymers in the water separation treatment device to the dehydration device based on an elapsed time of the water separation treatment.

11. The waste treatment device according to any one of claims 7 to 10, wherein
the water separation treatment device includes a treatment tank that stores the polymers and the treatment liquid and performs a water separation treatment, and a water supply unit, and
the water supply unit supplies water to the treatment tank before the polymers subjected to the water separation treatment and the treatment liquid are transferred to the dehydration device.

12. The waste treatment device according to any one of claims 7 to 11, wherein
an on-off valve is provided in a discharge path for transferring the treatment liquid and the polymers in the water separation treatment device to the dehydration device, and
the control unit opens the on-off valve based on magnitude of the representative parameter.

13. A waste treatment device comprising:
a treatment tank capable of storing crushed pieces of an object to be treated having polymers in a water-absorbed state and a treatment liquid for reducing a water retention capacity of the polymers; and
a stirring member including a disk-shaped main body, and a rib protruding from a surface of the main body and extending in a radial direction from a rotation center of the main body, the stirring member being rotatably provided in the treatment tank.

14. The waste treatment device according to claim 13, wherein
the stirring member is arranged on a bottom surface of the treatment tank and is rotatable about a drive shaft extending in a vertical direction, and
the rib protrudes from an upper surface of the main body.

15. The waste treatment device according to claim 14, wherein the stirring member is rotatable in both a forward direction and an opposite direction.

16. The waste treatment device according to claim 15, wherein a rotation angle of the stirring member in the forward direction is 10° or more and 120° or less.

17. The waste treatment device according to any one of claims 15 and 16, wherein a rotation angle of the stirring member in the opposite direction is 10° or more and 120° or less.

18. The waste treatment device according to any one of claims 15 to 17, wherein the stirring member is alternately rotatable in the forward direction and in the opposite direction.

19. The waste treatment device according to claim 18, wherein a rotation angle of the stirring member in the forward direction is larger than a rotation angle of the stirring member in the opposite direction.

20. The waste treatment device according to any one of claims 18 and 19, wherein a rotation time of the stirring member in the forward direction is longer than a rotation time of the stirring member in the opposite direction.

21. The waste treatment device according to any one of claims 14 to 20, wherein a peripheral speed of an outer periphery of the stirring member is 100 to 500 mm/s.

22. The waste treatment device according to any one of claims 14 to 21, wherein
the treatment tank has a discharge port for discharging crushed pieces and a treatment liquid in the treatment tank, and
in a flow generated by rotation of the stirring member at the time of discharge, a flow line of a flow toward the discharge port is substantially parallel to or overlaps a flow line of a discharge flow at the discharge port.

23. The waste treatment device according to claim 22, wherein
the discharge port is opened so as to face a peripheral edge portion of the bottom surface of the treatment tank, and
the stirring member is arranged at a position closer to the discharge port than to a center of the bottom surface of the treatment tank.

24. The waste treatment device according to any one of claims 14 to 23, wherein
the bottom surface of the treatment tank includes a first inclined surface that supports the stirring member, and a second inclined surface continuous with a lowermost end edge of the first inclined surface, and
an inclination angle of the first inclined surface with respect to a horizontal plane is smaller than an inclination angle of the second inclined surface with respect to the horizontal plane.

25. The waste treatment device according to any one of claims 13 to 24, comprising:
a discharge port for discharging crushed pieces and a treatment liquid in the treatment tank; and
a water supply unit for supplying water to the treatment tank when discharge from the discharge port is performed.

26. The waste treatment device according to claim 25, wherein the water supply unit includes a nozzle that discharges water toward the discharge port.

27. A waste treatment device comprising a treatment tank in which crushed pieces of an object to be treated having polymers in a water-absorbed state and a treatment liquid for reducing a water retention capacity of the polymers are stored,
wherein a discharge port for discharging the crushed pieces and the treatment liquid in the treatment tank is opened on a side surface of the treatment tank.

28. The waste treatment device according to claim 27, wherein
a stirring member is rotatably provided on a bottom surface of the treatment tank, and
the bottom surface of the treatment tank is inclined downward toward the discharge port.

29. The waste treatment device according to claim 28, wherein the stirring member is arranged at a position closer to the discharge port than to a center of the bottom surface of the treatment tank.

30. The waste treatment device according to any one of claims 27 to 29, wherein a height dimension from the bottom surface of the treatment tank to a liquid surface at a time of maximum storage of the treatment liquid is within 3 times a height from the bottom surface of the treatment tank to an uppermost end of the discharge port.

31. The waste treatment device according to any one of claims 27 and 30, wherein a height dimension of an opening region of the discharge port is 50 mm or more.

32. The waste treatment device according to any one of claims 27 to 31, wherein
a stirring member is rotatably provided on a bottom surface of the treatment tank, and
in a flow generated by rotation of the stirring member at the time of discharge from the discharge port, a flow line of a flow toward the discharge port is substantially parallel to or overlaps a flow line of a discharge flow at the discharge port.

33. The waste treatment device according to any one of claims 27 to 32, comprising a nozzle that discharges water toward the discharge port.
